# EUROPEAN PATENT APPLICATION

(11) **EP 2 213 553 A1**
(43) Date of publication of application: **04.08.2010**
(21) Application number: 08841178.0
(22) Date of filing: 23.10.2008
(51) Int. Cl.: B62D 25/20

(54) **STRUCTURE FOR SIDE PORTION OF VEHICLE BODY**

(30) Priority: 24.10.2007 JP 2007276528
(71) Applicant: Toyota Jidosha Kabushiki Kaisha, Toyota-shi, Aichi 471-8571 (JP)
(72) Inventor: NAKANO, Takashi, Toyota-shi Aichi 471-8571 (JP)
(74) Representative: Kuhnen & Wacker
(86) International application number: PCT/JP2008/069245
(87) International publication number: WO 2009/054459

(57) **Abstract**

An object of the invention is to provide a structure for a side portion of a vehicle body, in which deformation of a hollow cross-section shape of a side sill, which is caused by a side collision load inputted to a vehicle body, can be suppressed without causing a significant increase in the weight of the vehicle body. In the invention, when a side collision load is inputted to a center pillar 4 of the side portion of a vehicle body, thereby causing a lower end portion of the center pillar 4 to pull up a side sill 1, a bead 7G of a bulkhead 7 made of sheet metal and provided in the side sill 1 reinforces the compressive strength in the diagonal direction of a hollow cross-section between a lower portion of a side sill outer member 1A constituting an outer wall portion of the side sill 1 and an upper portion of a side sill inner member 1B constituting an inner wall portion of the side sill 1, thereby suppressing deformation of the hollow cross-section shape of the side sill 1. Here, the bulkheads 7 made of sheet metal are locally disposed in the vicinity of joined portions between the side sill 1 and ends of a front floor cross member 5 and a center floor cross member, so that a significant increase in the weight of the vehicle body is not caused.

## Description

### STRUCTURE FOR SIDE PORTION OF VEHICLE BODY

### Technical Field

The present invention relates to a structure for a side portion of a vehicle body of a vehicle, and particularly, to a structure for a side portion of a vehicle body, in which an end portion of a beam member extending in the width direction of the vehicle body and a lower end portion of a pillar member extending in the height direction of the vehicle body are joined to a side sill, which has a hollow closed cross-section and extends in the front-and-rear direction along a lower side portion of the vehicle body.

### Background Art

As a structure for a side portion of a vehicle body of a vehicle, hitherto, there has been generally known a structure which is provided with a side sill (or a rocker), which has a hollow closed cross-section and extends in the front-and-rear direction along a lower side portion of a vehicle body, and in which a lower end portion of a center pillar disposed at a side portion of the vehicle body and extending in the height direction is joined to an intermediate portion in the front-and-rear direction of the side sill. As this kind of structure for a side portion of a vehicle body, for example, in Patent Citation 1, there is described a structure in which a reinforcement member of a Z-shaped cross-section is disposed in a side sill (rocker).

### Citation List

Patent Citation 1 JP-A-2007-112203 (Paragraph 0035, Fig. 5)

### Summary of Invention

### Technical Problem

However, in the reinforcement member of a Z-shaped cross-section described in Patent Citation 1, since a connection portion extending along a diagonal direction of a hollow cross-section of the side sill is simply formed into a flat plate shape, it cannot be said that buckling strength in a diagonal direction of the hollow cross-section of the side sill is always sufficiently high.

Therefore, if a center pillar is bent inside the vehicle body due to a side collision load inputted to the vehicle body, so that the side sill is pulled up by a lower end portion of the center pillar, the side sill is deformed in the diagonal direction of the hollow cross-section, so that there is a fear that the hollow cross-section shape thereof will be largely deformed.

Naturally, if the buckling strength of the connection portion of the Z-shaped cross-section of the reinforcement member is increased by increasing the length of the reinforcement member, it is considered that it is possible to suppress deformation of the hollow cross-section shape of such a side sill. However, in this case, the weight of the vehicle body is significantly increased.

Therefore, the object of the present invention is to provide a structure for a side portion of a vehicle body, in which deformation of a hollow cross-section shape of a side sill, which is caused by a side collision load inputted to the vehicle body, can be suppressed without causing a significant increase in the weight of the vehicle body.

### Technical Solution

A structure for a side portion of a vehicle body according to an embodiment of the present invention is a structure for a side portion of a vehicle body, in which an end portion of a beam member extending in the width direction of the vehicle body and a lower end portion of a pillar member extending in the height direction of the vehicle body are joined to a side sill, which has a hollow cross-section and extends in the front-and-rear direction along a lower side portion of the vehicle body, and is **characterized in that** a reinforcement member which reinforces strength in a diagonal direction of the hollow cross-section of the side sill is provided in the side sill.

In the structure for a side portion of a vehicle body according to the present invention, when a side collision load is inputted to the vehicle body, so that the side sill is pulled up by the lower end portion of the pillar member extending in the height direction of the vehicle body, the reinforcement member provided in the side sill reinforces strength in the diagonal direction of the hollow cross-section of the side sill, thereby suppressing deformation of the hollow cross-section shape of the side sill. The reinforcement member is disposed in the vicinity of the beam member or the pillar member of the vehicle body, so that a significant increase in the weight of the vehicle body is not caused.

For reduction in the weight of the structure for a side portion of a vehicle body according to the present invention, it is preferable that the reinforcement member be constituted of a bulkhead which is made of sheet metal and has a bead formed along the diagonal of the hollow cross-section between a lower portion of an outer wall portion and an upper portion of an inner wall portion of the side sill. For further reduction in the weight, the bulkhead made of sheet metal can be made into a shape in which both side portions of the bead are cut out along the bead portion.

In the structure for a side portion of a vehicle body according to the present invention, in which the reinforcement member is constituted of the bulkhead made of sheet metal, the bead of the bulkhead reinforces the compressive strength in the diagonal direction of the hollow cross-section between the lower portion of the outer wall portion and the upper portion of the inner wall portion of the side sill, thereby suppressing deformation of the hollow cross-section shape of the side sill.

In addition, in the structure for a side portion of a vehicle body according to the present invention, the reinforcement member may also be constituted of a tensile member disposed along the diagonal of the hollow cross-section between a lower portion of the inner wall portion and an upper portion of the outer wall portion of the side sill. In this case, the tensile member reinforces tensile strength in the diagonal direction of the hollow cross-section between the lower portion of the inner wall portion and the upper portion of the outer wall portion of the side sill, thereby suppressing deformation of the hollow cross-section shape of the side sill.

Also, a structure for a side portion of a vehicle body according to another embodiment of the present invention is a structure for a side portion of a vehicle body, in which an end portion of a beam member extending in the width direction of the vehicle body and a lower end portion of a pillar member extending in the height direction of the vehicle body are joined to a side sill, which has a hollow cross-section and extends in the front-and-rear direction along a lower side portion of the vehicle body, and is **characterized in that** a reinforcement member is provided in the side sill and the reinforcement member makes the compressive strength in a direction connecting a corner portion of a lower portion of an outer wall portion and a corner portion of an upper portion of an inner wall portion of the side sill be higher than the compressive strength in a direction connecting a corner portion of an upper portion of the outer wall portion and a corner portion of a lower portion of the inner wall portion of the side sill.

When a side collision load is inputted to the vehicle body, so that the side sill is pulled up by the lower end portion of the pillar member extending in the height direction of the vehicle body, it is considered that a compressive force is applied along a direction connecting a corner portion of the lower portion of the outer wall portion and a corner portion of the upper portion of the inner wall portion of the side sill. In the structure for a side portion of a vehicle body according to the present invention, the reinforcement member provided in the side sill can increase the compressive strength in a direction connecting a corner portion of the lower portion of the outer wall portion and a corner portion of the upper portion of the inner wall portion of the side sill. Therefore, deformation of the hollow cross-section shape of the side sill, which is caused by a side collision load inputted to the vehicle body, can be suppressed.

Also, a structure for a side portion of a vehicle body according to still another embodiment of the present invention is a structure for a side portion of a vehicle body, in which an end portion of a beam member extending in the width direction of the vehicle body and a lower end portion of a pillar member extending in the height direction of the vehicle body are joined to a side sill, which has a hollow cross-section and extends in the front-and-rear direction along a lower side portion of the vehicle body, and is **characterized in that** a reinforcement member is provided in the side sill and the reinforcement member is provided with a convex body which projects in the front-and-rear direction of the vehicle body and is formed along a direction from a lower portion of an outer wall portion toward an upper portion of an inner wall portion of the side sill.

When a side collision load is inputted to the vehicle body, so that the side sill is pulled up by the lower end portion of the pillar member extending in the height direction of the vehicle body, it is considered that a compressive force is applied from the lower portion of the outer wall portion toward the upper portion of the inner wall portion of the side sill. In the structure for a side portion of a vehicle body according to the present invention, the convex body which projects in the front-and-rear direction of the vehicle body and is formed along a direction from the lower portion of the outer wall portion toward the upper portion of the inner wall portion of the side sill is provided at the reinforcement member provided in the side sill. Therefore, the compressive strength in a direction from the lower portion of the outer wall portion toward the upper portion of the inner wall portion of the side sill is increased, so that deformation of the hollow cross-section shape of the side sill, which is caused by a side collision load inputted to the vehicle body, can be suppressed.

Also, in the structure for a side portion of a vehicle body according to the present invention, the reinforcement member may also have a configuration in which it is provided so as not to cover at least one portion of the hollow cross-section.

According to such a configuration, when painting the side sill, it is possible to easily allow painting liquid to infiltrate into the inside of the side sill from a portion, which is not covered by the reinforcement member, in the hollow cross-section. Also, it is possible to realize reduction in the weight of the reinforcement member while securing the compressive strength of the side sill.

Also, in the structure for a side portion of a vehicle body according to the present invention, a configuration may also be adopted in which an opening portion penetrating in the front-and-rear direction of the vehicle body is formed in the reinforcement member.

According to such a configuration, when painting the side sill, it is possible to easily allow painting liquid to infiltrate into the inside of the side sill from the opening portion formed in the reinforcement member. Also, it is possible to realize reduction in the weight of the reinforcement member while securing the compressive strength of the side sill.

### Advantageous Effects

According to the structure for a side portion of a vehicle body according to the present invention, since the reinforcement member provided in the side sill reinforces strength in the diagonal direction of the hollow cross-section of the side sill, deformation of the hollow cross-section shape of the side sill, which is caused by the upward raising of the side sill due to a side collision load inputted to the vehicle body can be suppressed without causing a significant increase in the weight of the vehicle body.

According to the structure for a side portion of a vehicle body according to the present invention, in which the reinforcement member is constituted of the bulkhead made of sheet metal, since the bead of the bulkhead reinforces the compressive strength of the hollow cross-section between the lower portion of the outer wall portion and the upper portion of the inner wall portion of the side sill, it is possible to suppress deformation of the hollow cross-section shape of the side sill, which is caused by a side collision load inputted to the vehicle body, and it is also possible to reduce an increase in the weight of the structure for a side portion of a vehicle body.

### Brief Description of Drawings

Fig. 1 is a perspective view of a structure for a side portion of a vehicle body related to an embodiment of the present invention.
Fig. 2 is a partially enlarged vertical cross-sectional view of the vicinity of a joined portion of a side sill and a front floor cross member shown in Fig. 1.
Fig. 3 is a front view of a bulkhead shown in Fig. 2.
Fig. 4 is a cross-sectional view taken along line IV-IV of Fig. 3.
Fig. 5 is a partially enlarged vertical cross-sectional view corresponding to Fig. 2 showing behavior of the side sill when a side collision load is inputted to the side portion of a vehicle body shown in Fig. 1.
Fig. 6 is a front view showing a modified example of the bulkhead shown in Fig. 3.
Fig. 7 is a partially enlarged vertical cross-sectional view showing a first modified example of the structure for the side portion of the vehicle body shown in Fig. 2.
Fig. 8 is a cross-sectional view taken along line VIII-VIII of Fig. 7.
Fig. 9 is a cross-sectional view taken along line IX-IX of Fig. 7.
Fig. 10 is a partially enlarged vertical cross-sectional view showing a second modified example of the structure for the side portion of the vehicle body shown in Fig. 2.
Fig. 11 is a cross-sectional view taken along line XI-XI of Fig. 10.
Fig. 12 is a partially enlarged vertical cross-sectional view showing a third modified example of the structure for the side portion of the vehicle body shown in Fig. 2.
Fig. 13 is a partially enlarged vertical cross-sectional view showing a fourth modified example of the structure for a side portion of e vehicle body shown in Fig. 2.
Fig. 14 is a cross-sectional view taken along line XIV-XIV of Fig. 13.

### Explanation of References

1: side sill, 1A: side sill outer member, 1B: side sill inner member, 1C: upper joining piece, 1D: lower joining piece, 1E: upper joining piece, 1F: lower joining piece, 2: front pillar, 3: rear pillar, 4: center pillar, 4A: center pillar outer member, 4B: center pillar inner member, 5: front floor cross member, 6: center floor cross member, 7:
bulkhead (reinforcement member), 7A to 7F: joining piece, 7G: bead, 71 to 74: bulkhead (reinforcement member), 71G, 72G, 73G, 74G: bead (convex body), 74J: opening portion

### Description of Embodiments

Hereinafter, embodiments of a structure for a side portion of a vehicle body according to the present invention will be explained with reference to the drawings. Incidentally, in explanation of the drawings, the same components are designated with the same reference numerals and duplicate explanation is omitted.

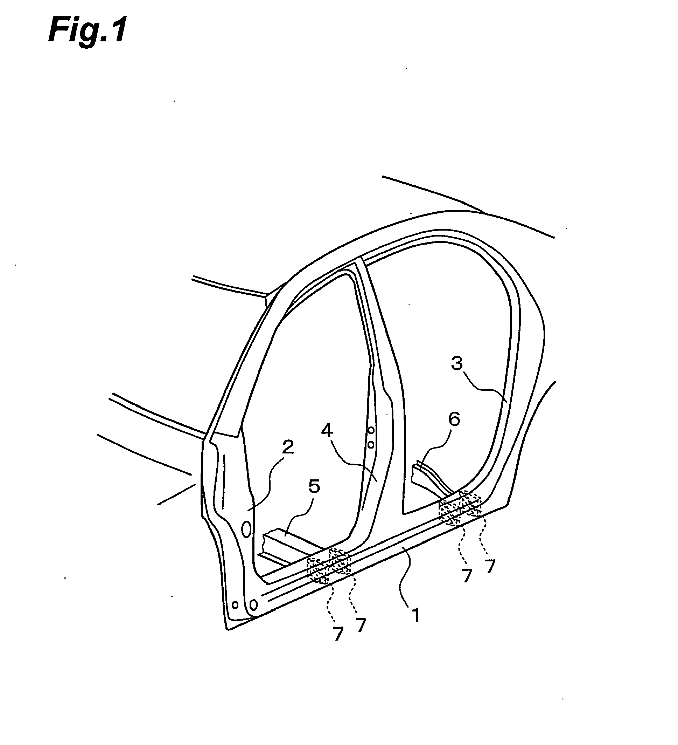

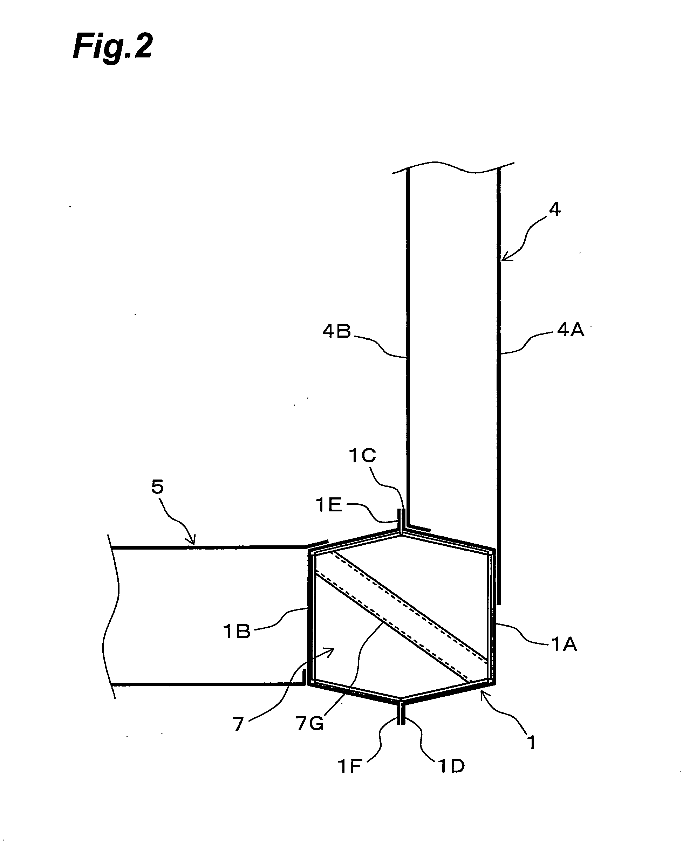

In the reference drawings, Fig. 1 is a perspective view of a structure for a side portion of a vehicle body related to an embodiment, and Fig. 2 is a partially enlarged vertical cross-sectional view of the vicinity of a joined portion of a side sill and a front floor cross member shown in Fig. 1.

As shown in Fig. 1, the structure for a side portion of a vehicle body related to one embodiment includes a side sill 1 which has a hollow cross-section and extends in the front-and-rear direction along a lower side portion of a vehicle body. A lower end portion of a front pillar 2 is joined to a front end portion of the side sill 1, and a lower end portion of a rear pillar 3 is joined to a rear end portion of the side sill. Also, a lower end portion of a center pillar 4 is joined to an intermediate portion in the front-and-rear direction of the side sill 1. Further, an end portion of a front floor cross member 5 is joined to a portion of the side sill 1 between the front pillar 2 and the center pillar 4, and an end portion of a center floor cross member 6 is joined to a portion of the side sill 1 between the center pillar 4 and the rear pillar 3.

As shown in Fig. 2, the side sill 1 has a hollow cross-section of an approximately hexagonal shape formed by joining a side sill outer member 1A and a side sill inner member 1B, which are each formed to have a channel type cross-section. An upper joining piece 1C and a lower joining piece 1D, which serve as joining portions, are formed at the side sill outer member 1A, and an upper joining piece 1E and a lower joining piece 1F, which serve as joining portions, are formed at the side sill inner member 1B.

The center pillar 4 is constituted to have a hollow cross-section formed by joining a center pillar outer member 4A and a center pillar inner member 4B. A lower end portion of the center pillar outer member 4A is joined to a side wall portion of the side sill outer member 1A constituting an outer wall portion of the side sill 1, and a lower end portion of the center pillar inner member 4B is joined straddle both an upper wall portion of the side sill outer member 1A and the upper joining piece 1C.

Here, a bulkhead 7 made of sheet metal and having a frontal shape of an approximately hexagonal shape, which serves as a reinforcement member reinforcing strength in the diagonal direction of the side sill, is fitted into the side sill 1 having a hollow cross-section of an approximately hexagonal shape. As shown in Fig. 1, the bulkheads 7 are locally disposed at two front and rear places adjacent to the joined portion of the side sill 1 and an end portion of the front floor cross member 5 and two front and rear places adjacent to the joined portion of the side sill 1 and an end portion of the center floor cross member 6.

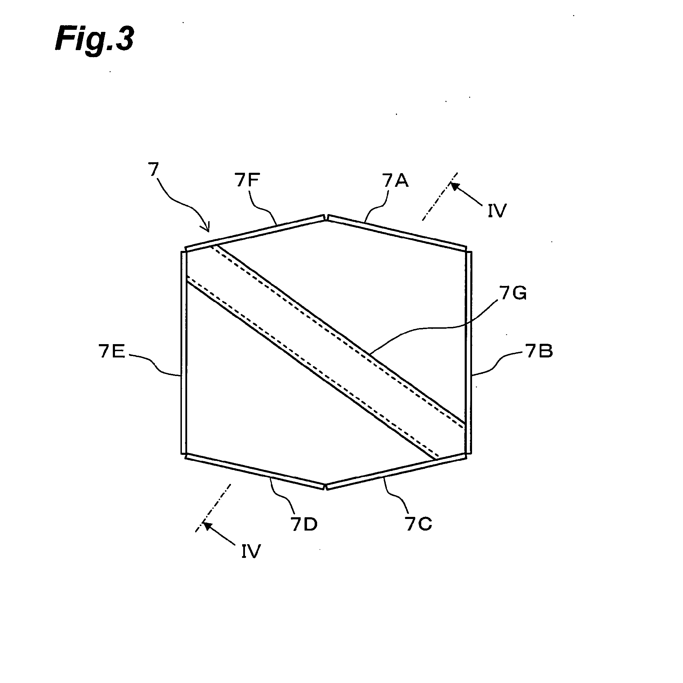

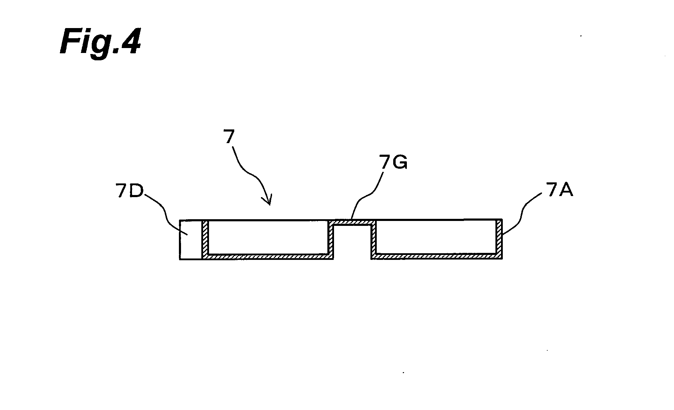

As shown in Figs. 3 and 4, joining pieces 7A to 7F which are joined to an inner surface of the side sill 1 are bent and formed at a peripheral border of the bulkhead 7. The joining pieces 7A to 7C are respectively joined to the inner surfaces of the upper wall portion, the side wall portion, and the lower wall portion of the side sill outer member 1A, and the joining pieces 7D to 7F are respectively joined to the inner surfaces of the lower wall portion, the side wall portion, and the upper wall portion of the side sill inner member 1B.

Also, at such a bulkhead 7, a bead 7G which projects in the bent direction of the joining pieces 7A to 7F is formed along the diagonal from a corner portion between the joining piece 7B and the joining piece 7C toward a corner portion between the joining piece 7E and the joining piece 7F. That is, the bead 7G is formed along the diagonal between a lower portion of the side sill outer member 1A constituting the outer wall portion of the side sill 1 shown in Fig. 2 and an upper portion of the side sill inner member 1B constituting the inner wall portion of the side sill 1.

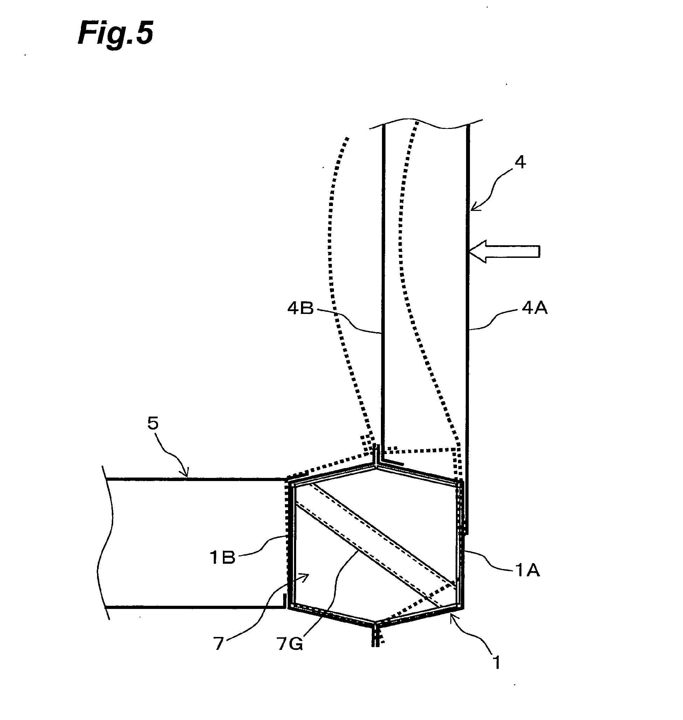

In the structure for a side portion of a vehicle body of one embodiment configured as described above, when a side collision load as shown by an outline arrow in Fig. 5 is inputted to the center pillar 4 of the side portion of the vehicle body, so that the side sill 1 is pulled up by the lower end portion of the center pillar 4, the bead 7G of the bulkhead 7 made of sheet metal and disposed as a reinforcement member in the side sill 1 reinforces the compressive strength between the lower portion of the side sill outer member 1A constituting the outer wall portion of the side sill 1 and the upper portion of the side sill inner member 1B constituting the inner wall portion of the side sill 1.

Therefore, deformation of the cross-section shape, as shown by a dotted line, is suppressed, so that the side sill 1 is maintained in a normal cross-section shape, as shown by a solid line. Then, the side sill 1 reliably transmits a side collision load, which is inputted through the center pillar 4, to the front floor cross member 5 and the center floor cross member 6, thereby securing a reactive force thereof.

Also, in the structure for a side portion of a vehicle body of this embodiment, the side sill 1 is formed by joining the side sill outer member 1A and the side sill inner member 1B at approximately the center of the hollow cross-section of an approximately hexagonal shape (refer to Fig. 2). That is, in the side sill 1, the upper joining piece 1C and the upper joining piece 1E are joined to each other at approximately the center portion on the upper face side, and the lower joining piece 1D and the lower joining piece 1F are joined to each other at approximately the center portion on the lower face side. In addition, since the bead 7G of the bulkhead 7 is formed along the diagonal between the lower portion of the side sill outer member 1A and the upper portion of the side sill inner member 1B, the bead is separated from the joined surfaces of the side sill outer member 1A and the side sill inner member 1B.

By such a configuration, since the area of the portion facing the end portion of the bead 7G of the bulkhead 7 among the upper face of the side sill 1 can be reduced, deformation of the upper face of the side sill 1 due to the a side collision load, which is inputted through the center pillar 4, can be suppressed.

Here, since the bulkheads 7 made of a sheet metal are locally disposed at two front and rear places adjacent to the joined portion of the side sill 1 and an end portion of the front floor cross member 5 and two front and rear places adjacent to the joined portion of the side sill 1 and an end portion of the center floor cross member 6, a significant increase in the weight of the vehicle body is not caused, so that an increase in the weight thereof is reduced.

That is, according to the structure for a side portion of a vehicle body of one embodiment, since the bead 7G of the bulkhead 7 reinforces the compressive strength between the lower portion of the outer wall portion and the upper portion of the inner wall portion of the side sill 1, deformation of the hollow cross-section shape of the side sill 1, which is caused by a side collision load inputted to the center pillar 4 of the side portion of the vehicle body, can be suppressed, so that an increase in the weight of the structure for a side portion of a vehicle body can also be reduced.

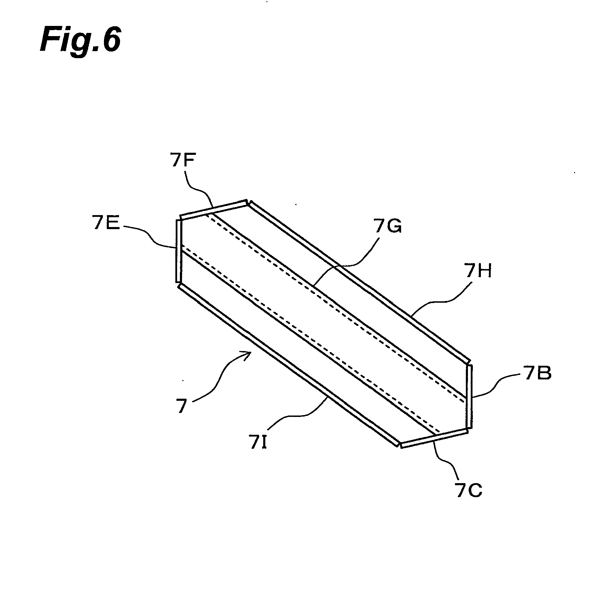

The structure for a side portion of a vehicle body according to the present invention is not to be limited to one embodiment. For example, the bulkhead 7 shown in Fig. 1 may also be disposed in the vicinity of the joined portion of the side sill 1 and the lower end portion of the center pillar 4. Also, the bulkhead 7 shown in Fig. 3 may be made into a shape in which both side portions of the bead 7G are cut out along the bead 7G, as shown in Fig. 6, so that reduction in the weight can be achieved.

Also, in the bulkhead 7 shown in Fig. 6, if convex pieces 7H and 7I are formed by bending side edges of both side portions of the bead 7G in the same direction as the protrusion direction of the bead 7G, since the convex pieces 7H and 7I further reinforce the compressive strength between the lower portion of the outer wall portion and the upper portion of the inner wall portion of the side sill 1 in cooperation with the bead 7G, deformation of the hollow cross-section shape of the side sill 1 can be further effectively suppressed.

In addition, in the bulkhead 7 shown in Fig. 3, the joining pieces 7A and 7D may also be omitted, and any one of the remaining joining pieces 7B and 7C or the remaining joining pieces 7E and 7F need not be joined to the inner surface of the side sill 1.

Also, the reinforcement member which is a principal part of the structure for a side portion of a vehicle body according to the present invention may also be made by a tensile member disposed along the diagonal between the lower portion of the inner wall portion and the upper portion of the outer wall portion of the side sill 1. In this case, the tensile member reinforces tensile strength between the lower portion of the inner wall portion and the upper portion of the outer wall portion of the side sill, thereby suppressing deformation of the cross-section shape of the side sill 1.

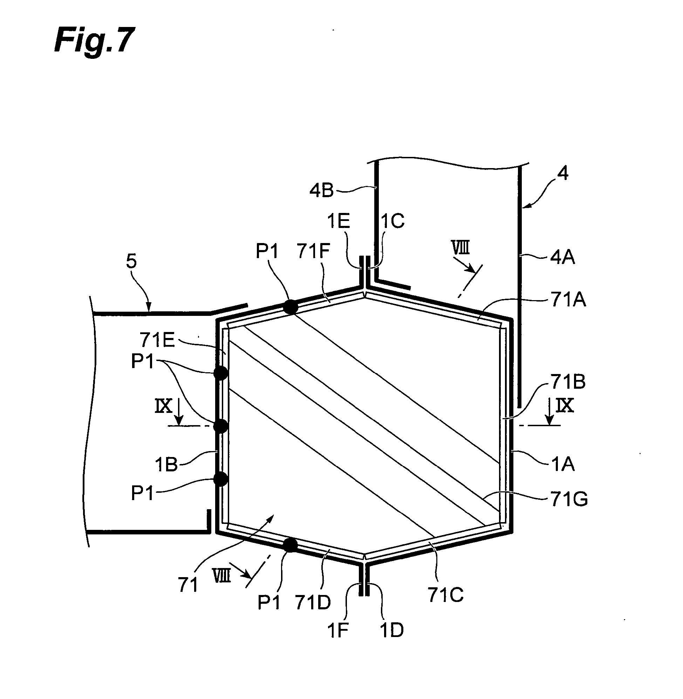

Also, in the structure for a side portion of a vehicle body according to the present invention, as shown in Figs. 7 to 9, a convex body which is formed along the direction from the lower portion of the outer wall portion toward the upper portion of the inner wall portion may also be provided. As shown in Fig. 7, a bulkhead 71 made of sheet metal and having a frontal shape of an approximately hexagonal shape is provided in the side sill 1 having a hollow cross-section of an approximately hexagonal shape, as a reinforcement member which reinforces strength in the diagonal direction of the side sill. This structure for a side portion of a vehicle body is different from the structure for a side portion of a vehicle body related to the above-described embodiment in terms of the shape of the bulkhead 71 and a joining aspect to the side sill 1.

As shown in Figs. 7 to 9, at the bulkhead 71, there is provided a bead 71G which projects in the front-and-rear direction of the vehicle body and is formed along the direction from the lower portion of the outer wall portion toward the upper portion of the inner wall portion of the side sill 1. That is, at the bulkhead 71, the bead 71G is formed along the direction from the lower portion of the side sill outer member 1A constituting the outer wall portion of the side sill 1 shown in Fig. 7 toward the upper portion of the side sill inner member 1B constituting the inner wall portion of the side sill 1. Further, in other words, in the side sill 1, the bulkhead 71 is provided in the vicinity of the front floor cross member 5, and the bulkhead 71 makes the compressive strength in the direction connecting a corner portion of the lower portion of the outer wall portion and a corner portion of the upper portion of the inner wall portion of the side sill 1 be higher than the compressive strength in the direction connecting a corner portion of the upper portion of the outer wall portion and a corner portion of the lower portion of the inner wall portion of the side sill 1.

At the peripheral borders of the bulkhead 71 in this modified example, convex pieces 71A to 71C and joining pieces 71 D to 71F are bent and formed. The bead 71G is formed along the diagonal from a corner portion between the convex piece 71B and the convex piece 71C toward a corner portion between the joining piece 71E and the joining piece 71F, as shown in Fig. 7. Also, the bead 71G continuously reinforces a portion between both corner portion vicinities. Further, the continuous reinforcement is made to have the same level of strength over the length direction of the bead 71G. In addition, the bead 71 G projects to the opposite side to the bent side of the convex pieces 71A to 71C and the joining pieces 71D to 71F.

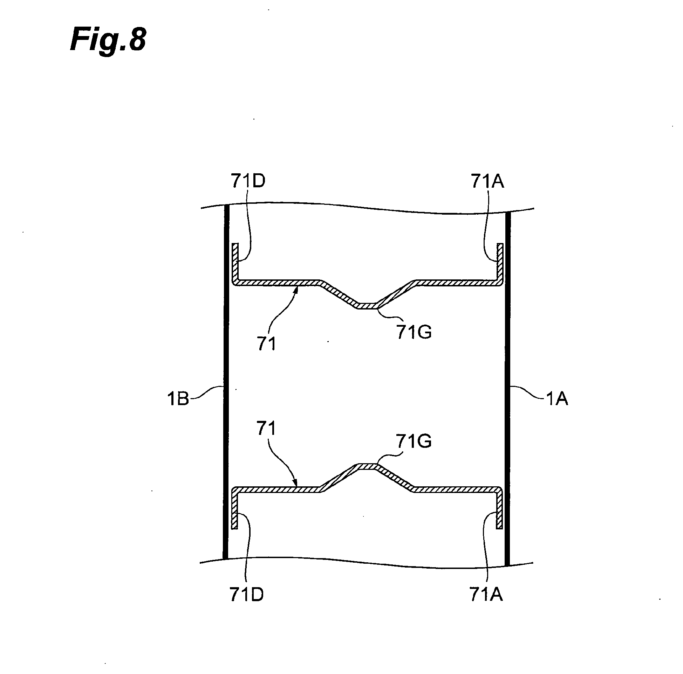

Also, as shown in Fig. 8, the bead 71G is formed to have a cross-section shape projecting in a trapezoidal shape. That is, a rising portion of the bead 71G is not formed perpendicularly to the front-and-rear direction of the vehicle body, but obliquely formed. According to such a configuration, the side sill 1 can be more widely reinforced.

Also, the bulkhead 71 is joined to the side sill inner member 1B. That is, the joining pieces 71D to 71F are respectively joined to the inner surfaces of the lower wall portion, the side wall portion, and the upper wall portion of the side sill inner member 1B. More specifically, the joining pieces 71D to 71F are joined to the inner surface of the side sill inner member 1B by spot-welding at welding portions P1 of a plurality of places (in Fig. 7, five places), as shown in Fig. 7. Here, the convex pieces 71A to 71C are not joined to the side sill outer member 1A.

According to such a configuration, since the positional relationship between the bulkhead 71 and the side sill inner member 1B hardly varies, load can be suitably transmitted. That is, load is easily transmitted to the front floor cross member 5. Further, the convex pieces 71A to 71C are not joined to the side sill outer member 1A, so that generation of noise is suppressed by a gap which is formed between the convex pieces 71A to 71C and the side sill outer member 1A.

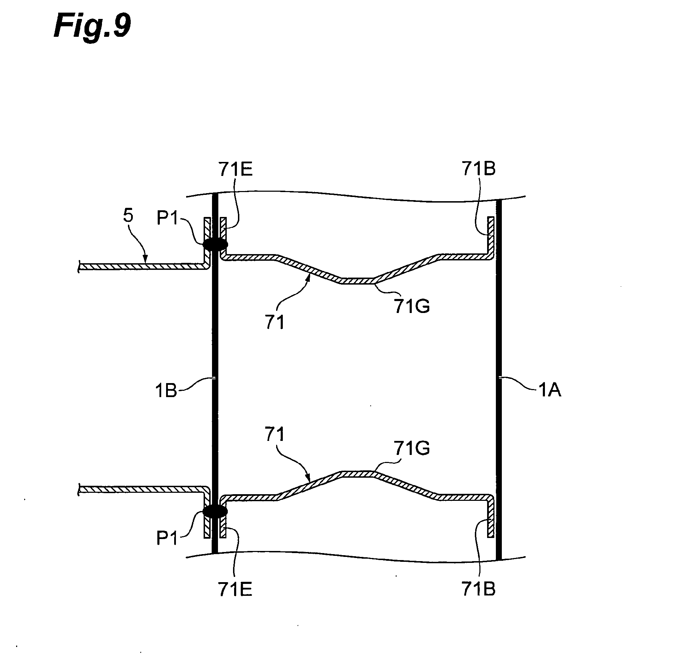

In addition, the bulkheads 71 of this modified example are disposed at two front and rear places adjacent to the joined portion of the side sill 1 and an end portion of the front floor cross member 5, similarly to the above-described embodiment (refer to Fig. 1). In this modified example, as shown in Fig. 9, the bulkheads 71 are provided such that the respective beads 71 G face each other. Further, since the joining pieces 71D to 71F are bent to the opposite side to the bead 71G, it becomes easy to join the joining pieces 71D to 71F to the side sill inner member 1B in the assembly of the structure for a side portion of a vehicle body.

According to the bulkhead 71 having the above-described configuration, it is possible to make the compressive strength in the direction connecting a corner portion of the lower portion of the outer wall portion and a corner portion of the upper portion of the inner wall portion of the side sill 1 be higher than the compressive strength in the direction connecting a corner portion of the upper portion of the outer wall portion and a corner portion of the lower portion of the inner wall portion of the side sill 1.

When a side collision load is inputted to the vehicle body, so that the side sill 1 is pulled up by a lower end portion of a pillar member extending in the height direction of the vehicle body, it is considered that a compressive force is applied from the lower portion of the outer wall portion of the side sill 1 toward the upper portion of the inner wall portion of the side sill. When such a compressive force is applied, according to the structure for a side portion of a vehicle body of the above-described modified example, the compressive strength in the direction from the lower portion of the outer wall portion toward the upper portion of the inner wall portion of the side sill 1 is increased, so that deformation of the hollow cross-section shape of the side sill 1, which is caused by a side collision load inputted to the vehicle body, can be suppressed.

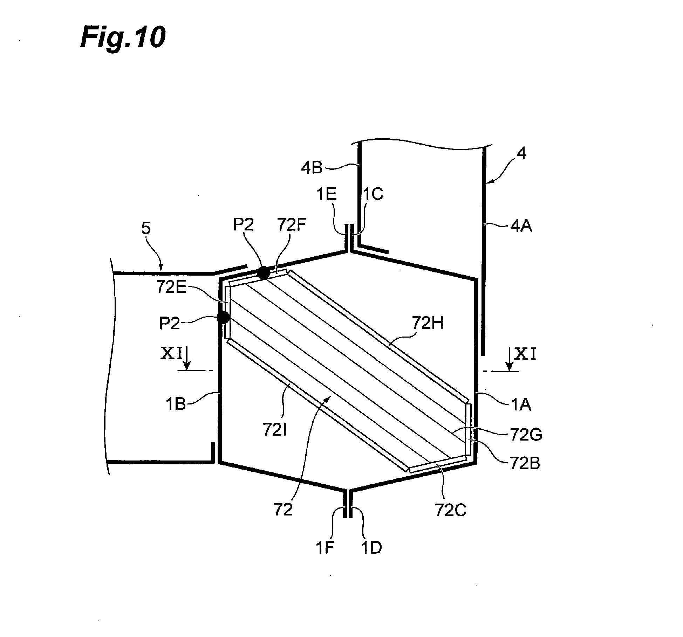

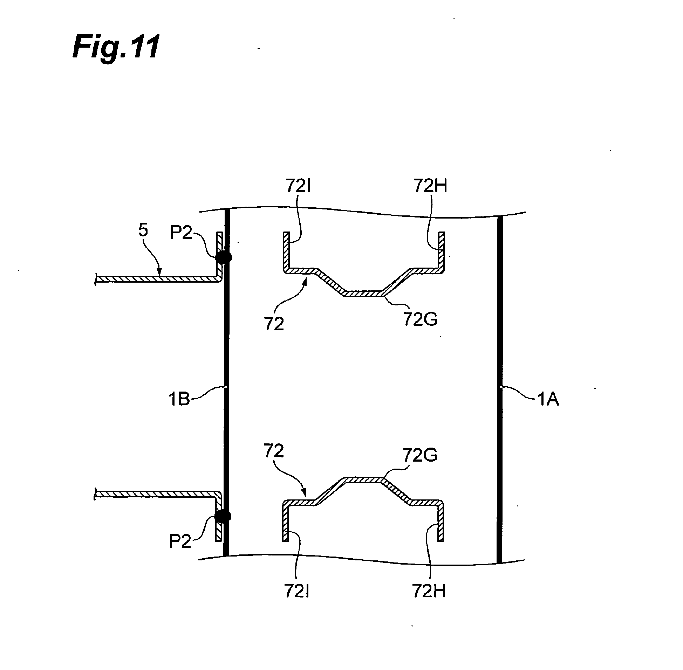

Also, in the structure for a side portion of a vehicle body according to the present invention, as shown in Figs. 10 and 11, a shape may also be adopted in which both side portions of the bulkhead are cut out along a bead 72G. That is, a bulkhead 72 may also be provided so as not to cover at least one portion of the hollow cross-section of the side sill 1.

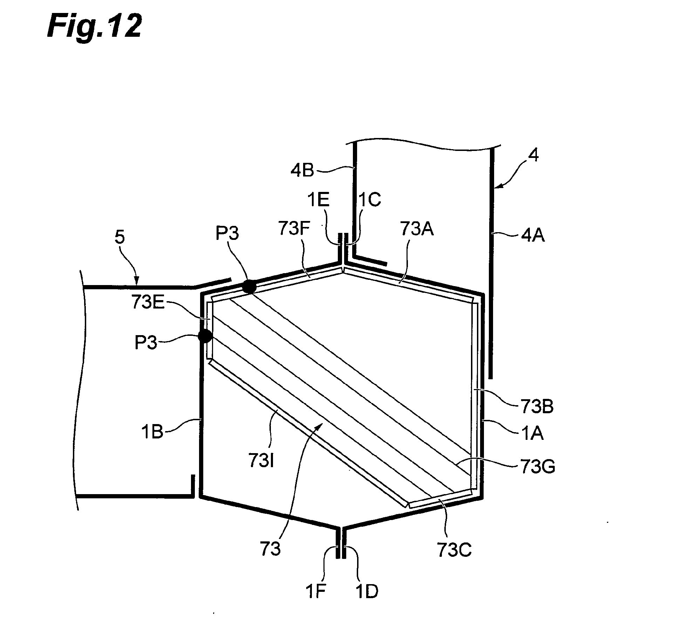

In the bulkhead 72, similarly to the bulkhead 71 in the previous modified example, a rising portion of the bead 72G is obliquely formed. Also, a joining piece 72E and a joining piece 72F are respectively joined to the inner surfaces of the side wall portion and the upper wall portion of the side sill inner member 1B. More specifically, the joining pieces 72E and 72F are joined to the inner surface of the side sill inner member 1B by spot-welding at welding portions P2 of a plurality of places (in Fig. 12, two places).

According to such a configuration, when painting the side sill 1, it is possible to easily allow painting liquid to infiltrate into the inside of the side sill 1 from a portion, which is not covered by the bulkhead 72, in the hollow cross-section. Also, it is possible to realize reduction in the weight of the bulkhead 72 while securing the compressive strength of the side sill 1.

Also, at both side portions of the bead 72G, a convex piece 72H and a convex piece 72I are bent and formed. Further, end portions on the vehicle body side of the convex pieces 72H and 72I respectively come into contact with joining pieces 72F and 72E which are joined to the side sill inner member 1B. Therefore, the compressive strength in the direction connecting a corner portion of the lower portion of the outer wall portion and a corner portion of the upper portion of the inner wall portion of the side sill 1 can be increased.

Also, in the structure for a side portion of a vehicle body according to the present invention, as shown in Fig. 12, a shape may also be adopted in which a portion below a bead 73G is cut out along the bead. That is, a bulkhead 73 may also be provided so as not to cover one portion on the lower side in the hollow cross-section of the side sill 1.

The bulkhead 73 is different from the bulkhead 72 in the previous modified example in that portions above the bead 73G are not cut out and are formed along the upper wall portion, the outer wall portion (side wall portion), and the lower wall portion of the side sill 1. In addition, convex pieces 73A to 73C are not joined to the side sill outer member 1A.

According to such a configuration, since load from the side can be transmitted through the portions above the bead 73G, the compressive strength of the side sill 1 can be secured. Also, it is possible to easily allow painting liquid to infiltrate into the inside of the side sill 1 from a non-covered portion below the bead 73G. In addition, it is possible to realize reduction in the weight of the bulkhead 73.

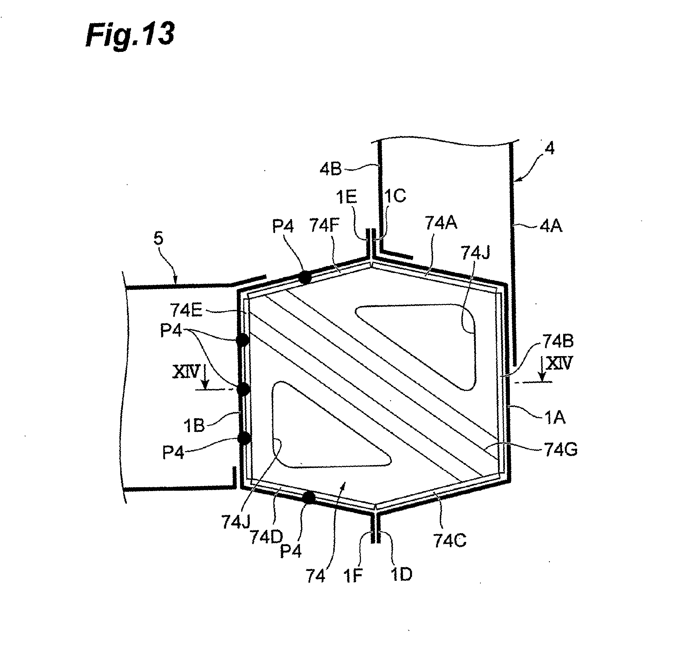

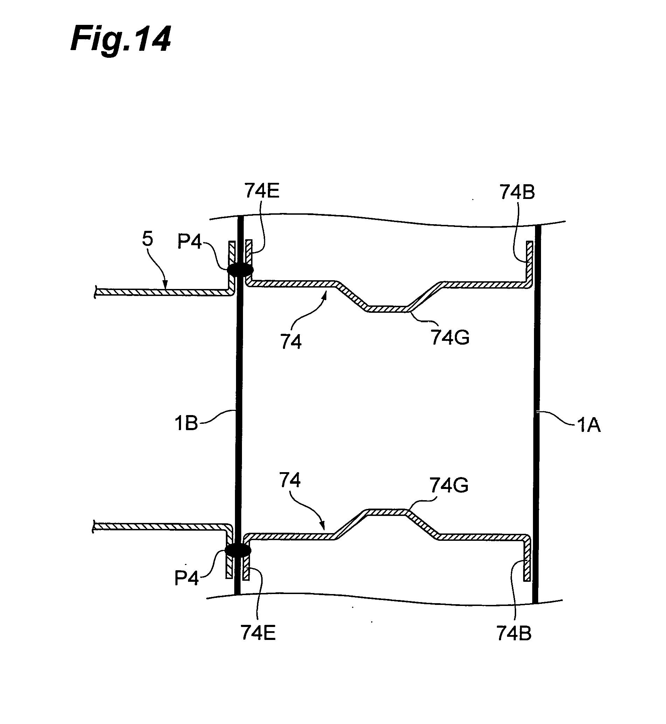

Also, in the structure for a side portion of a vehicle body according to the present invention, as shown in Figs. 13 and 14, a bulkhead 74 may also have opening portions 74J on both sides of a bead 74G. That is, at the bulkhead 74, the opening portions 74J which penetrate in the front-and-rear direction of the vehicle body may also be formed.

The bulkhead 74 has a frontal shape of an approximately hexagonal shape, and at a peripheral border thereof, convex pieces 74A to 74C and joining pieces 74D to 74F are bent and formed. Also, the bulkhead 74 is joined to the side sill inner member 1B in a similar manner to the modified example shown in Fig. 7.

According to such a configuration, since it is possible to transmit load from the side, the compressive strength of the side sill 1 can be secured. Also, it is possible to easily allow painting liquid to infiltrate into the inside of the side sill 1 from the opening portions 74J. Further, it is possible to realize reduction in the weight of the bulkhead 74.

Also, as shown in Fig. 14, it is preferable that positions of the joined portions of the front floor cross member 5 and the side sill inner member 1B overlap with positions, at which the bulkheads 74 are provided, in the front-and-rear direction of the vehicle. Further, it is even more preferable that positions of the joined portions of the front floor cross member 5 and the side sill inner member 1B overlap with positions of the beads 74G of the bulkhead 74 in the front-and-rear direction of the vehicle. By so doing, load from the side is easily transmitted to the front floor cross member 5.

The embodiment and the modified examples of the structure for a side portion of a vehicle body according to the present invention have been described in detail above. However, the structure for a side portion of a vehicle body according to the present invention is not to be limited to the above-described embodiment or modified examples. As described in the embodiment and the modified examples, it is preferable that the bulkhead be provided in the vicinity of the front floor cross member, the center floor cross member, or the center pillar. However, a position where the bulkhead is provided is not to be limited to the vicinity of the cross member or the pillar. For example, the bulkhead may also be provided at a position distant from the cross member or the pillar. Also, the bulkhead may also be joined only to the side sill outer member. In such a case, the assembling property can be improved. Also, the bulkhead may also be fastened to the side sill. Also, among the bulkheads which are provided at an end portion of the front floor cross member 5, the bulkhead on a pillar side, to which more force is applied, may also be made to have a configuration higher in strength than the other bulkhead. The strength of the bulkhead can be appropriately designed according to quality of a material or a wall thickness. Also, the bead which is provided at the bulkhead may also be formed to have a cross-section shape projecting in a semicircular shape. Also, a reinforcement member may also be attached to the bulkhead without providing the bead, or the bulkhead may also be formed of a thick plate. The forming of the bulkhead by the thick plate may also be performed by using a tailored blank.

### Industrial Applicability

According to the structure for a side portion of a vehicle body according to the present invention, since the reinforcement member provided in the side sill reinforces strength in the diagonal direction of the hollow cross-section of the side sill, deformation of the hollow cross-section shape of the side sill, which is caused by the upward raising of the side sill due to a side collision load inputted to the vehicle body, can be suppressed without causing a significant increase in the weight of the vehicle body.

## Claims

1. A structure for a side portion of a vehicle body, in which an end portion of a beam member extending in the width direction of the vehicle body and a lower end portion of a pillar member extending in the height direction of the vehicle body are joined to a side sill, which has a hollow cross-section and extends in the front-and-rear direction along a lower side portion of the vehicle body, the structure comprising:
a reinforcement member provided in the side sill and reinforcing strength in a diagonal direction of the hollow cross-section of the side sill.

2. The structure for a side portion of a vehicle body according to Claim 1, wherein the reinforcement member is a bulkhead made of sheet metal, and at the bulkhead, a bead is formed along a diagonal of the hollow cross-section between a lower portion of an outer wall portion and an upper portion of an inner wall portion of the side sill.

3. The structure for a side portion of a vehicle body according to Claim 2, wherein the bulkhead has a shape in which both side portions of the bead are cut out along the bead.

4. The structure for a side portion of a vehicle body according to Claim 1, wherein the reinforcement member is a tensile member disposed along the diagonal of the hollow cross-section between a lower portion of an inner wall portion and an upper portion of an outer wall portion of the side sill.

5. A structure for a side portion of a vehicle body, in which an end portion of a beam member extending in the width direction of the vehicle body and a lower end portion of a pillar member extending in the height direction of the vehicle body are joined to a side sill, which has a hollow cross-section and extends in the front-and-rear direction along a lower side portion of the vehicle body, the structure comprising:
a reinforcement member provided in the side sill,
wherein the reinforcement member makes the compressive strength in a direction connecting a corner portion of a lower portion of an outer wall portion and a corner portion of an upper portion of an inner wall portion of the side sill be higher than the compressive strength in a direction connecting a corner portion of an upper portion of the outer wall portion and a corner portion of a lower portion of the inner wall portion of the side sill.

6. A structure for a side portion of a vehicle body, in which an end portion of a beam member extending in the width direction of the vehicle body and a lower end portion of a pillar member extending in the height direction of the vehicle body are joined to a side sill, which has a hollow cross-section and extends in the front-and-rear direction along a lower side portion of the vehicle body, the structure comprising:
a reinforcement member provided in the side sill,
wherein the reinforcement member is provided with a convex body which projects in the front-and-rear direction of the vehicle body and is formed along a direction from a lower portion of an outer wall portion toward an upper portion of an inner wall portion of the side sill.

7. The structure for a side portion of a vehicle body according to Claim 6, wherein the reinforcement member is provided so as not to cover at least one portion of the hollow cross-section.

8. The structure for a side portion of a vehicle body according to Claim 6 or 7, wherein an opening portion penetrating in the front-and-rear direction of the vehicle body is formed in the reinforcement member.
